# EUROPEAN PATENT APPLICATION

(11) **EP 1 048 382 A2**
(43) Date of publication of application: **02.11.2000**
(21) Application number: 99124850.1
(22) Date of filing: 15.12.1999
(51) Int. Cl.: B23B 31/02

(54) **Interference fit type cutting tool**

(30) Priority: 31.03.1999 JP 9425699; 23.06.1999 JP 17753999
(71) Applicant: MITSUBISHI MATERIALS CORPORATION, Chiyoda-ku, Tokyo (JP)
(72) Inventor: Nagaya, Hidehiko, Mitsubishi Materials Corp., Yuuki-gun, Ibaraki-ken (JP); Shimomura, Hiroshi, Mitsubishi Materials Corp., Yuuki-gun, Ibaraki-ken (JP); Hirose, Takeshi, Mitsubishi Materials Corp., Yuuki-gun, Ibaraki-ken (JP); Yamada, Masato, Mitsubishi Materials Corp., Tokyo (JP)
(74) Representative: HOFFMANN - EITLE

(57) **Abstract**

In an interference fit type cutting tool according to the present invention, a projection and a fitting projection are formed at the rear end of an edge section and at the leading end of a shank section, respectively. A connecting member is provided with first and second holes that have a predetermined interference with respect to the outer diameters of the projection and the fitting projection. The edge section and the shank section are fixed by interference fitting between the first hole and the projection, and between the second hole and the fitting projection. Chatter vibration is reduced by making the edge section and the shank section of a high-rigidity material having a lower coefficient of thermal expansion than that of the connecting member.

## Description

### BACKGROUND OF THE INVENTION

### Field of the Invention

The present invention relates to an interference fit type cutting tool having a tool holding section and a tool.

This specification is based on patent applications filed in Japan (Japanese Patent Applications Nos. 10-226286, 11-094256, and 11-177539), and the descriptions in the Japanese applications are incorporated as a part of this specification.

### Background Art

Conventionally, an edge-replaceable cutting tool having a detachable edge section is known, in which a projection is formed in one of the edge section and a shank section, a hole is formed in the other so as to have a predetermined interference with respect to the projection, and the edge section and the shank section are fixed by using interference fitting of the projection and the hole.

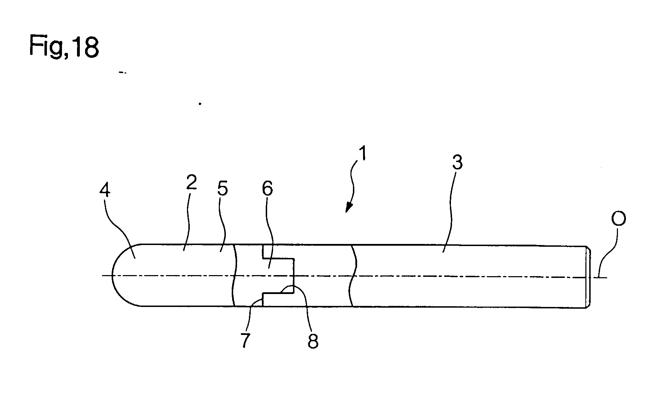

Fig. 18 is a sectional side view showing a joint portion between an edge section and a shank section in an endmill as an example of the above edge-replaceable cutting tool. A tool body 1 is composed of an edge section 2 and a shank section 3. The edge section 2 is made of cemented carbide having high rigidity, and is composed of a leading end portion 4, a shaft portion 5, and a projection 6, which are disposed in that order from the leading end toward the base end (rear end) in the direction of the axis O of the tool body.

The leading end portion 4 is directly used for cutting, and is provided with a cutting edge (not shown). The shaft portion 5 is cylindrical and is coaxial with the axis O. The projection 6 has a smaller diameter than that of the shaft portion 5 by an appropriate dimension, and is cylindrical and is coaxial with the axis O. The shank section 3 is made of steel, and has a higher coefficient of thermal expansion than that of the edge section 2. The shank section 3 is cylindrical and is coaxial with the axis O, has an outer diameter equal to that of the shaft portion 5 of the edge section 2, and is provided with a hole 8 that extends coaxially with the axis O from a leading end face 7 toward the base end.

The inner diameter of the hole 8 is set to have a predetermined interference with respect to the outer diameter of the projection 6 in the edge section 2, and has a depth equal to or greater than the length of the projection 6 in the direction of the axis O.

In order to connect the edge section 2 and the shank section 3 in the edge-replaceable cutting tool having the above configuration, first, the hole 8 is thermally expanded by heating the shank section 3 until the projection 6 of the edge section 2 can be inserted therein, and the projection 6 is then inserted into the hole 8. Next, when the shank section 3 is cooled, the hole 8 thermally contracts and tightly fastens the projection 6, whereby fixing of the edge section 2 is completed.

On the other hand, when detaching the edge section 2 from the shank section 3, the hole 8 is thermally expanded by heating the shank section 3 until the projection 6 can be drawn out, and then the edge section 2 is detached.

In the above-described edge-replaceable cutting tool, however, the shank section having the hole formed therein must be made of a material having a higher coefficient of thermal expansion than that of the edge section having the projection. The material having a high coefficient of thermal expansion is low in rigidity, and therefore, chatter vibration is apt to arise during cutting.

### SUMMARY OF THE INVENTION

In view of such circumstances, an object of the present invention is to provide an interference fit type cutting tool that has high stiffness and that causes little chatter vibration.

In order to achieve the above object, an interference fit type cutting tool according to the present invention includes a tool having a cutting edge, and a tool holding section that are detachably fixed through a connecting member, wherein the connecting member has at least a predetermined interference with respect to the tool, and is fixed to the tool by interference fitting, and the tool holding section is made of a high-rigidity material.

By making the tool holding section of a high-rigidity material, it is possible to obtain a cutting tool that is high in stiffness overall and that causes little chatter vibration, and to allow a difficult-to-cut material to be subjected to heavy cutting. Moreover, the tool can be detachable from the connecting member for replacement.

In one preferred embodiment of the present invention, the connecting member is made of a material having a higher coefficient of thermal expansion than that of the tool holding section. By thermally expanding and contracting the connecting member so as to be attached to and detachable from the tool and the tool holding section, the tool and the tool holding section can be replaceably mounted.

In another preferred embodiment of the present invention, a projection is formed at the rear end of the tool, the connecting member has a hole that provides a predetermined interference with respect to the projection, and the projection of the tool is inserted in the hole of the connecting member and is fixed by interference fitting.

In a further preferred embodiment of the present invention, a projection is formed at the rear end of the tool, a projection is formed at the leading end of the tool holding section, and the connecting member has holes that provide a predetermined interference with respect to the projections of the tool and the tool holding section. The projections of the tool and the tool holding section are inserted in the holes of the connecting member so as to face each other in the axial direction, and are fixed in an interference-fitted state.

By making the tool and the tool holding section of a high-hardness material such as cemented carbide having high rigidity, it is possible to allow a difficult-to-cut material to be subjected to heavy cutting, to enhance tool stiffness, and to reduce chatter vibration. The tool and the tool holding section may be replaced.

In a further preferred embodiment of the present invention, the connecting member has a higher coefficient of thermal expansion than those of the tool and the tool holding section, a projection is formed at one of the base end of the tool and the leading end of the tool holding section, and a recess is formed at the other. A fitting recess and a fitting projection are formed at the leading end and the base end of the connecting member so as to be interference-fitted on and in the projection and the recess.

The fitting recess is formed at one end of the connecting member, while the fitting projection is formed at the other end. Therefore, when the tool or the tool holding section connected to one end is replaced, the tool holding section or the tool connected to the other end does not separate from the connecting member. For example, when the fitting recess of the connecting member is thermally expanded when replacing the tool or the tool holding section, the fitting projection also thermally expands, and the interference pressure with respect to the recess increases. Therefore, the tool holding section or the tool, which need not be replaced, does not separate from the connecting member. Similarly, when the fitting projection is thermally contracted, the fitting recess also thermally contracts, and the interference pressure with respect to the projection increases. Therefore, the tool holding section or the tool not required to be replaced is prevented from separating from the connecting member together with the tool or the tool holding section required to be replaced.

In a further preferred embodiment of the present invention, the tool holding section is a tool shaft, the connecting member is an attachment section for interference-fitting the tool, and the tool shaft is provided with a fixing portion for mounting the tool shaft in a machine tool.

By making the tool shaft of a high-hardness material, stiffness is enhanced, and there is no fear that chatter vibration due to deflection will occur during cutting. Since the tool is connected by interference fitting, mounting accuracy is high, and cracks and the like are less likely to occur, compared with the case of brazing, which allows high-precision cutting. Moreover, the tool can be easily replaced.

In a further preferred embodiment of the present invention, the fixing portion and the tool shaft are connected by interference fitting.

Both the leading end and the base end of the tool shaft are connected to the tool and the fixing portion by interference fitting. Accordingly, mounting accuracy is enhanced, cracks and the like are less likely to occur, compared with the case of brazing, and strength is high.

In a still further preferred embodiment of the present invention, the tool shaft and the attachment section are integrally formed. When the tool shaft and the attachment section are integrally formed, and the tool is fitted by interference fitting, the interference fitting can be established with a small number of members.

### BRIEF DESCRIPTION OF THE DRAWINGS

Fig. 1 is a broken side view showing a joint portion between an edge section and a shank section in a ball endmill according to a first embodiment of the present invention.

Fig. 2 is a broken side view showing a joint portion between an edge section and a shank section in a first modification of the ball endmill shown in Fig. 1.

Fig. 3 is a broken side view showing s joint portion between an edge section and a shank section in a second modification of the ball endmill shown in Fig. 1.

Fig. 4 is a broken side view showing a joint portion between an edge section and a shank section in a ball endmill according to a second embodiment of the present invention.

Fig. 5 is a longitudinal sectional view showing a state in which an edge section, a connecting member, and a shank section are separate from one another in a ball endmill according to a third embodiment of the present invention.

Fig. 6 is a longitudinal sectional view showing a state in which the connecting member in the state shown in Fig. 5 is connected to the shank section.

Fig. 7 is a longitudinal sectional view showing a state in which the edge section in the state shown in Fig. 6 is connected to the connecting member.

Fig. 8 is a longitudinal sectional view showing a state in which an edge section, a connecting member, and a shank section are separate from one another in a ball endmill according to a fourth embodiment of the present invention.

Fig. 9 is a longitudinal sectional view showing a state in which the connecting member in the state shown in Fig. 8 is connected to the shank section.

Fig. 10 is a longitudinal sectional view showing a state in which the edge section in the state shown in Fig. 9 is connected to the connecting member.

Fig. 11 is a longitudinal sectional view showing the principal part of a ball endmill according to a fifth embodiment of the present invention.

Fig. 12 is an exploded sectional view of the ball endmill shown in Fig. 11.

Fig. 13 is an exploded sectional view of a ball endmill according to a sixth embodiment.

Fig. 14 is an exploded sectional view of a ball endmill according to a seventh embodiment.

Fig. 15 is an exploded sectional view of a ball endmill according to an eighth embodiment.

Fig. 16 is a partial sectional view showing a first modification of a structure for joining a mounting portion of an arbor and a tool shaft.

Fig. 17 is a partial sectional view showing a second modification of a structure for joining the mounting portion of the arbor and the tool shaft.

Fig. 18 is a broken side view showing a joint portion between an edge section and a shank section in a conventional ball endmill.

### DESCRIPTION OF THE PREFERRED EMBODIMENTS

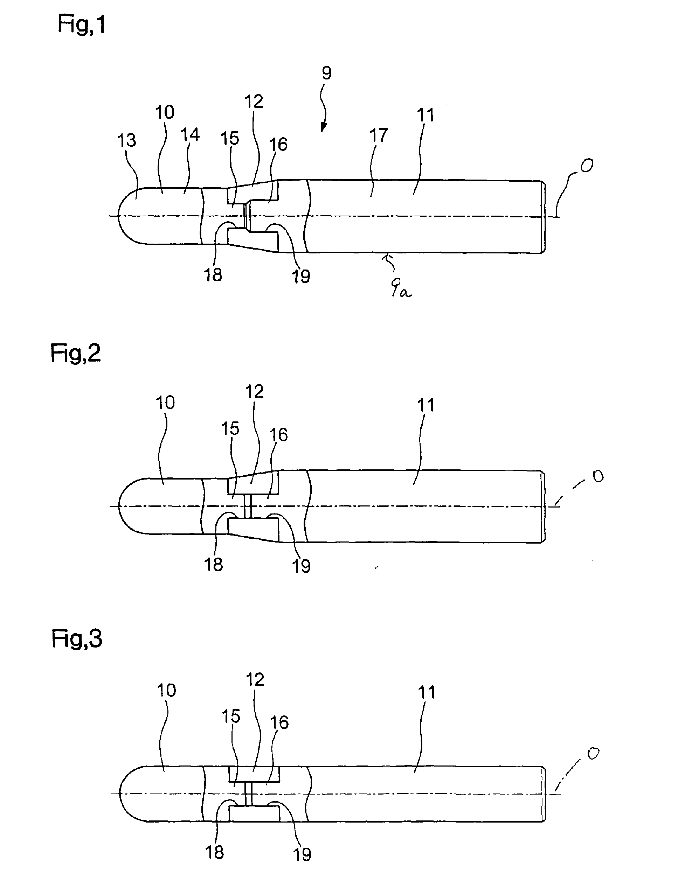

A first embodiment of the present invention will be described below with reference to Fig. 1.

A tool body 9a of a ball endmill 9 shown in Fig. 1 comprises an edge section 10, a shank section 11, and a connecting member 12 for connecting these sections in the direction of the axis O.

The edge section 10 is made of, for example, cemented carbide, and is composed of a substantially hemispherical leading end portion 13, a substantially cylindrical shaft portion 14 that is coaxial with the axis O, and a projection 15, which are disposed in that order from the leading end toward the base end (rear end) in the direction of the axis 0.

The leading end portion 13 is a portion that is directly used for cutting, and is provided with a cutting edge (not shown) having, for example, substantially a 1/4-arc shape. The projection 15 is a portion that serves to make connection with the connecting member 12, has a diameter appropriately smaller than that of the shaft portion 14, and is coaxially formed in a cylindrical shape.

The shank section 11 is made of, for example, cemented carbide, and is composed of a fitting projection 16, and a cylindrical shaft portion 17 having a larger outer diameter than that of the shaft portion 14 and being coaxial with the axis O, which are disposed in that order from the leading end toward the base end in the direction of the axis O. The fitting projection 16 is a portion that serves to make connection with the connecting member 12, has a diameter appropriately smaller than that of the cylindrical shaft portion 17, and is coaxially formed in a cylindrical shape.

The connecting member 12 is made of a material having a higher coefficient of thermal expansion than those of the edge section 10 and the shank section 11, e.g., steel. The outer peripheral surface has a substantially conical shape. The outer diameter thereof at the leading end is equal to the outer diameter of the shaft portion 14 in the edge section 10, and the outer diameter at the base end is equal to the outer diameter of the cylindrical shaft portion 17 in the shank section 11. On the inner peripheral surface of the connecting member 12, a first hole (hole) 18 is formed from the leading end side along the axis O, and a second hole (hole) 19 is formed from the base end side. The radial centers of the holes 18 and 19 coincide with the axis O. The first hole 18 penetrates to the second hole 19 at an appropriate position in the direction of the axis O, thereby establishing a stepped shape.

The depths of the first hole 18 and the second hole 19 in the direction of the axis O are respectively set to be equal to or slightly larger than those of the projection 15 in the edge section 10 and the fitting projection 16 in the shank section 11.

The inner diameter of the first hole 18 is set to be slightly smaller than the outer diameter of the projection 15 in the edge section 10 so as to provide a predetermined interference, and the inner diameter of the second hole 19 is set to be slightly smaller than the outer diameter of the fitting projection 16 in the shank section 11 so as to provide a predetermined interference. The first hole 18 and the projection 15, and the second hole 19 and the fitting projection 16 are fixed in an interference-fitted state.

By setting the value of the above interference within the range of, for example, 0.005 mm to 0.100 mm, internal stress is prevented from being excessively caused by interference fitting.

The cutting tool of this embodiment has the above-described configuration. Next, description will be given of a method of attaching and detaching the edge section 10 to and from the shank section 11 via the connecting member 12.

First, when attaching the edge section 10 to the shank section 11, the connecting member 12 is heated to thermally expand the first and second holes 18 and 19 until the projection 15 of the edge section 10 and the fitting projection 16 of the shank section 11 are allowed to be inserted therein. Then, the projection 15 and the fitting projection 16 are inserted into the first and second holes 18 and 19.

Subsequently, when the connecting member 12 is cooled, the first and second holes 18 and 19 thermally contract. Therefore, the projection 15 of the edge section 10 and the fitting projection 16 of the shank section 11 are tightly fastened by the predetermined interferences, and fixing of the edge section 10 and the shank section 11 is completed.

On the other hand, when detaching the edge section 10 from the shank section 11, the connecting member 12 is heated to thermally expand the first and second holes 18 and 19, and the projection 15 of the edge section 10 and the fitting projection 16 of the shank section 11 are removed.

Since the connecting member 12 has a higher coefficient of thermal expansion than those of the edge section 10 and the shank section 11, even when heat caused by the above heating is conducted to the edge section 10 and the shank section 11, these sections can also be removed.

According to a cutting tool such as that of this embodiment, it is possible to select the materials of the edge section 10 and the shank section 11 in free combinations as long as the materials have a lower coefficient of thermal expansion than that of the material of the connecting member 12.

For this reason, particularly, when the shank section 11 is made of, for example, cemented carbide having high rigidity, it is possible to enhance stiffness of the tool body 9a, and to reduce chatter vibration during cutting.

Problems in interference fitting include the member with a hole formed therein being broken due to excessive internal stress when tightly fastened to the projection. When the member is repeatedly subjected to thermal expansion and thermal contraction, fatigue in the material thereof builds up, which may shorten the service life of the member. In the cutting tool having the above-described configuration, the above problems affect only the connecting member 12 that is more inexpensive in material and structure than the edge section 10 and the shank section 11, and this is effective in reducing maintenance cost of the cutting tool.

Fig. 2 shows a first modification of the edge-replaceable cutting tool according to the first embodiment. As shown in Fig. 2, the outer diameters of the projection 15 of the edge section 10 and the fitting projection 16 of the shank section 11 may be equal to each other, and the inner diameters of the first and second holes 18 and 19 of the connecting member 12 may be equal to each other. Furthermore, as in a second modification shown in Fig. 3, the outer diameters of the connecting member 12 at the leading end and the base end may be equal to each other, and the connecting member 12 may be cylindrically shaped. In short, it is satisfactory as long as the connecting member 12 has the holes 18 and 19 formed coaxially with the axis O so as to have predetermined interferences with respect to the outer diameters of the projection 15 of the edge section 10 and the fitting projection 16 of the shank section 11.

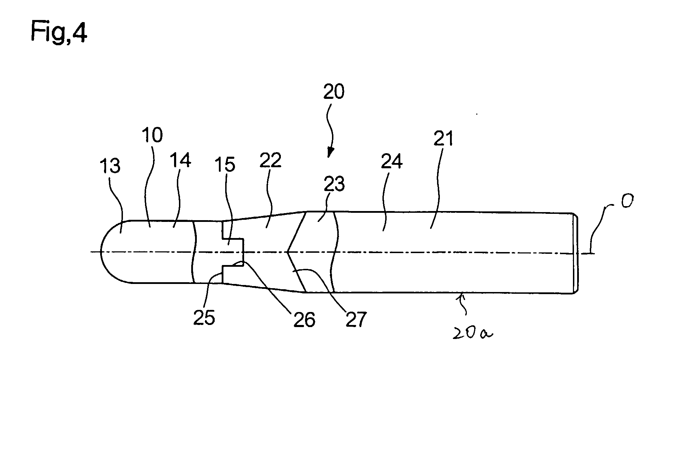

Next, a cutting tool according to a second embodiment of the present invention will be described with reference to Fig. 4. The same components as those in the above-described first embodiment are denoted by the same numerals, and description thereof is omitted.

A tool body 20a of a ball endmill 20 according to this embodiment comprises an edge section 10, a shank section 21, and a connecting member 22 for connecting these sections in the direction of the axis O.

The shank section 21 is made of, for example, cemented carbide, and is composed of a fitting projection 23, and a cylindrical shaft portion 24 formed coaxially with the axis O and having a larger outer diameter than that of a shaft portion 14 in the edge section 10, which are disposed in that order from the leading end toward the base end in the direction of the axis O.

The fitting projection 23 is a portion that serves to make connection with the connecting member 22, and is shaped like a cone that is coaxial with axis O.

The connecting member 22 is made of a material having a higher coefficient of thermal expansion than those of the edge section 10 and the shank section 21, e.g., steel. The outer peripheral surface thereof is formed in a tapered shape. The outer diameter thereof at the leading end is equal to the outer diameter of the shaft portion 14 in the edge section 10, and the outer diameter at the base end is equal to the outer diameter of the cylindrical shaft portion 24 in the shank section 21.

The connecting member 22 is provided with a hole 26 that is coaxial with the axis O and extends from a leading end face 25 toward the base end. The inner diameter of the hole 26 is set to be slightly smaller than the outer diameter of a projection 15 in the edge section 10 so as to provide a predetermined interference, and the depth thereof is equal to or slightly larger than the length of the projection 15 in the direction of the axis O. The hole 26 and the projection 15 are fixed in an interference-fitted state.

At the base end, a conical concave portion 27 is formed coaxially with the axis O so that the fitting projection 23 of the shank section 21 is fitted therein. The fitting projection 23 of the shank section 21 is fitted therein, and is fixedly by brazing.

The ball endmill 20 of this embodiment has the above-described configuration. The hole 26 is thermally expanded or contracted by heating and cooling the connecting member 22, which allows the projection 15 of the edge section 10 to be attached and detached.

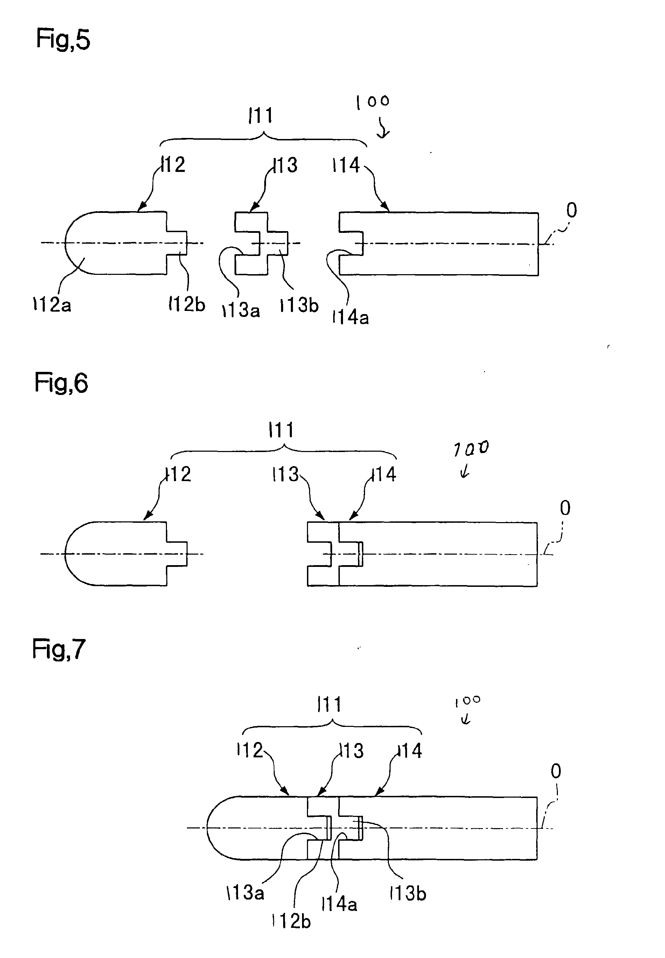

Next, a third embodiment of the present invention will be described with reference to Figs. 5 to 7.

In these figures, numerals 111, 112, 113, and 114 denote a tool body, an edge section, a connecting member, and a shank section, respectively. The tool body 111 of a ball endmill 100 is mainly composed of the edge section 112, the shank section 114, and the connecting member 113 for connecting these sections along the axis O of the tool body 111.

The edge section 112 is made of, for example, cemented carbide. At the base end of the edge section 112, a cylindrical projection 112b is formed to make connection with the connecting member 113. The projection 112b extends along the axis O, and the outer diameter and length thereof are set at appropriate values. The connecting member 113 is made of a material having a higher coefficient of thermal expansion than those of the edge section 112 and the shank section 114, e.g., steel. A fitting recess 113a to be connected to the projection 112b of the edge section 112 is formed at the leading end of the connecting member 113, and a fitting projection 113b to be connected to the shank section 114 is formed at the base end. The fitting recess 113a extends along the axis O. The inner diameter thereof is set to be slightly smaller than that of the projection 112b, and the depth thereof is set to be slightly larger than the length of the projection 112b. On the other hand, the fitting projection 113b extends along the axis O, and the outer diameter and length thereof are set at appropriate values.

The shank section 114 is made of, for example, cemented carbide. At the leading end of the shank section 114, a recess 114a is formed to be connected to the fitting projection 113b of the connecting member 113. The recess 114a extends along the axis O. The inner diameter thereof is set to be slightly smaller than that of the fitting projection 113b, and the depth thereof is set to be slightly larger than the length of the fitting projection 113b.

Next, description will be given of the procedure for combining the edge section 112, the connecting member 113, and the shank section 114 in a separate state (Fig. 5).

First, the projection 113b is thermally contracted by cooling the connecting member 113 until it is allowed to be inserted in the recess 114a, and is then inserted into the recess 114a. Subsequently, when the connecting member 113 is naturally left or is forcibly heated, the fitting projection 113b enlarges its diameter, and the connecting member 113 and the shank section 114 are expansion-fitted by the interference pressure caused by the difference between the outer diameter of the fitting projection 113b and the inner diameter of the recess 114a (Fig. 6).

The connecting member 113 and the shank section 114 can be connected not only by expansion fitting, but also by shrinkage fitting. In this case, the recess 114a is thermally expanded by heating the shank section 114 until the fitting projection 113b is allowed to be inserted therein, and then, the fitting projection 113b is inserted. Subsequently, when the shank section 114 is cooled, the recess 114a decreases its diameter, and the connecting member 113 and the shank section 114 are shrinkage-fitted by the interference pressure caused by the difference between the outer diameter of the fitting projection 113b and the inner diameter of the recess 114a.

On the other hand, when connecting the edge section 112 and the connecting member 113, the fitting recess 113a is thermally expanded by heating the connecting member 113, which has been combined through the above procedure, or by heating the connecting member 113 and the shank section 114 until the projection 112b is allowed to be inserted therein, and the, the projection 112b is inserted thereinto. In this case, since the fitting projection 113b also thermally expands and the interference pressure with respect to the recess 114c increases, the connecting member 113 and the shank section 114 do not separate from each other. Subsequently, the fitting recess 113a decreases its diameter by cooling the connecting member 113, and the connecting member 113 and the edge section 114 are expansion-fitted by the interference pressure caused by the difference between the outer diameter of the projection 112b and the inner diameter of the fitting recess 113a (Fig. 7).

In order to replace only the edge section 112 in the state shown in Fig. 7, it is only necessary to thermally expand the connecting member 113 by heating and to draw the projection 112b of the edge section 112 from the connecting member 113. In this case, since the fitting projection 113b also thermally expands and the interference pressure with respect to the recess 114a increases, the connecting member 113 and the shank section 114 do not separate from each other. Even if heat is conducted to the shank section 114 while the connecting member 113 is being heated, since the coefficient of thermal expansion of the shank section 114 is lower than that of the connecting member 113, the interference pressure between the fitting projection 113b and the recess 114a increases.

In order to replace only the shank section 114 in the state shown in Fig. 7, it is only necessary to cool the connecting member 113 and to draw the shank section 114 out of the connecting member 113. In this case, since the fitting recess 113a also thermally contracts, the edge section 112 and the connecting member 113 do not separate from each other. Even if heat is taken away from the edge section 112 while the connecting member 113 is being cooled, since the coefficient of thermal expansion of the edge section 112 is lower than that of the connecting member 113, the interference pressure between the fitting recess 113a and the projection 112b increases.

As described above, in the cutting tool of this embodiment, the edge section 112 and the shank section 114 can be made of cemented carbide or the like having low coefficient of thermal expansion, stiffness of the tool body 111 is enhanced, and chatter vibration during cutting can be reduced. Moreover, since the fitting recess 113a is formed at the leading end of the connecting member 113 while the fitting projection 113b is formed at the base end, the shank section 114 is prevented from also being separated from the connecting member 113 due to heat affection when replacing the edge section 112.

For this reason, as in the ball endmill of the above embodiment, it is possible to prevent the connecting member and the shank section from being separated although only the edge section needs to be replaced, and to prevent the edge section and the connecting member from being separated although only the shank section needs to be replaced. This makes the replacement operation easy and reliable.

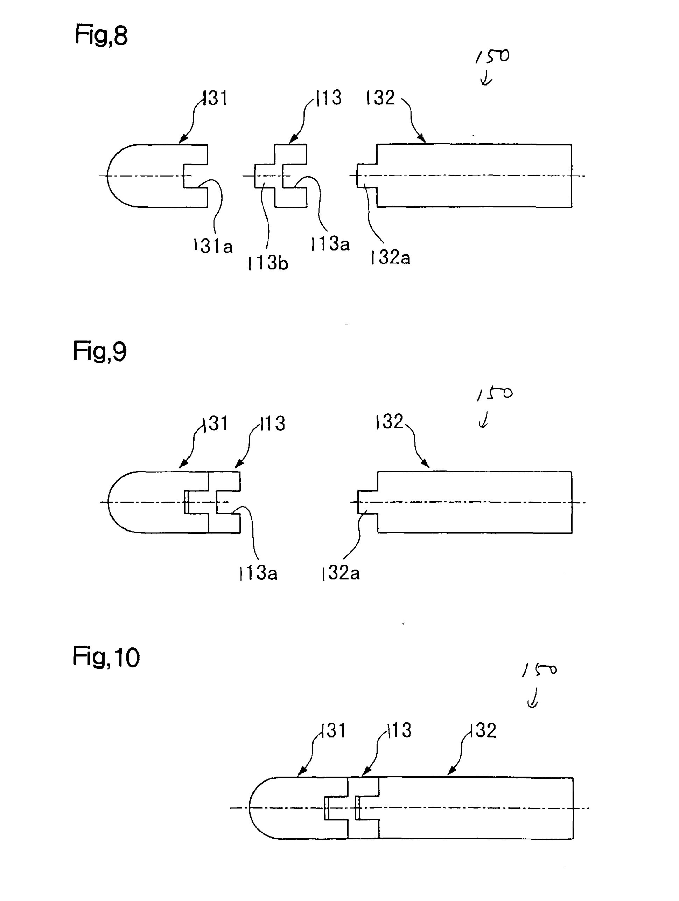

While the projection 112b is formed at the base end of the edge section 112 and the recess 114a is formed at the leading end of the shank section 114 in the ball endmill 100 of the above-described embodiment, a recess 131a may be formed at the base end of an edge section 131, a projection 132a may be formed at the leading end of a shank section 132, and a connecting member 113 having the same structure as described above may be interposed between the edge section 131 and the shank section 132 in the position longitudinally reverse to that shown in Fig. 5, as in a ball endmill 150 according to a fourth embodiment shown in Figs. 8 to 10.

While the edge sections 10, 112, and 131 and the shank sections 11, 21, 114, and 132 are made of cemented carbide in the above-described first to fourth embodiments, the edge sections 10, 112, and 131 may be made of cermet, high-speed steel, or the like, and the shank sections 11, 21, 114, and 132 may be made of cermet, high-hardness sintered material, or the like. The projections may adopt not only a cylindrical shape, but also other appropriate shapes, for example, a prism. In such a case, the hole, the fitting recess, the recess, and the like are formed in the shape corresponding to the prismatic shape or the like.

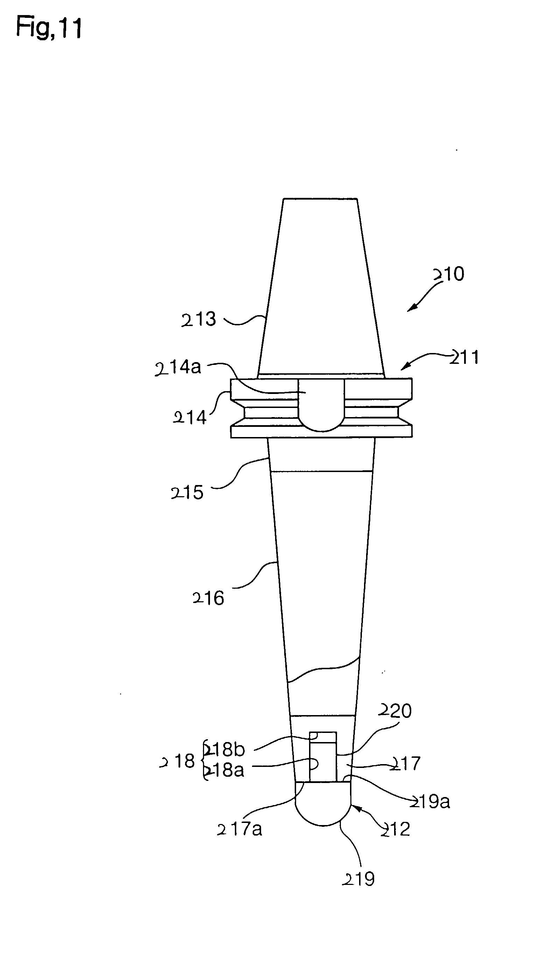

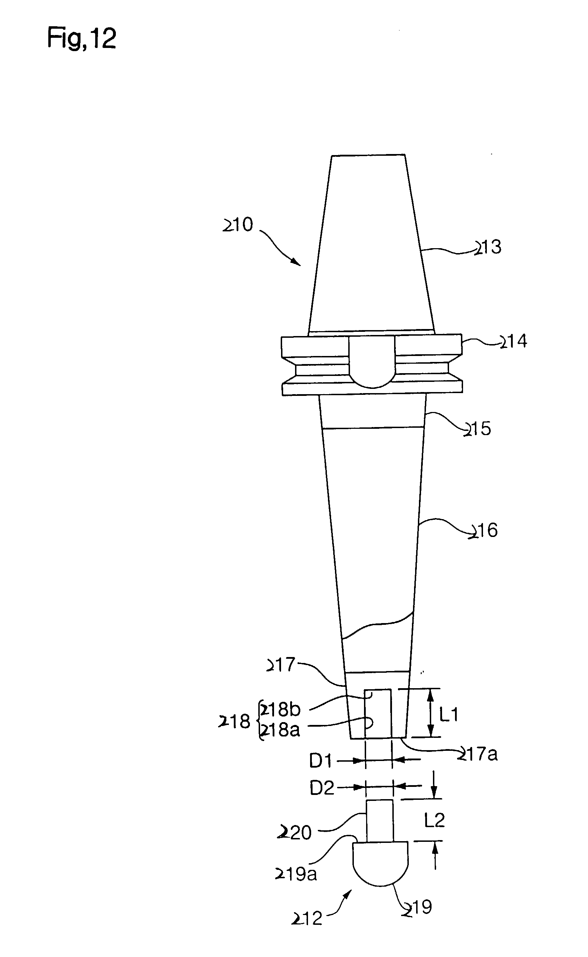

Next, a fifth embodiment of the present invention will be described with reference to Figs. 11 and 12.

A cutting tool, e.g., a ball endmill 210 shown in Figs. 11 and 12 is composed of an arbor 211 serving as a tool holder to be mounted to a main rotating spindle of a machine tool, and an edge section 212 (tool) fixed to the arbor 211.

The arbor 211 includes a taper shank portion 213 serving as a fixing portion for mounting to the main rotating spindle at the base end thereof, and a grip portion 214 connected to the taper shank portion 213 and having a substantially V-shaped recess all over the outer peripheral surface to be gripped by a manipulator or the like. A tapered mounting portion 215 is formed at the leading end of the grip portion 214. The grip portion 214 has a larger diameter than those of the taper shank portion 213 and the mounting portion 215, and is provided with a key groove 214a in which a key of the main rotating spindle is fitted. The taper shank portion 213, the grip portion 214, and the mounting portion 215 in the arbor 211 are made of steel or the like.

A tapered, elongated, and rodlike tool shaft 216 (tool holding section) is mounted to the mounting portion 215 by brazing or by other means. The tool shaft 216 is made of, for example, a high-hardness material such as cemented carbide or cermet. At the leading end of the tool shaft 216, an attachment portion 217 (connecting member) made of, for example, steel is mounted by brazing or by other means. The high-hard material means a material having high rigidity and a Young's modulus of more than 230 GPa (≈ 23000 kgf/mm²). The tool shaft 216 is formed with the mounting portion 215 and the attachment portion 217 in a tapered shape as a whole.

The attachment portion 217 is coaxially provided with a substantially cylindrical hole portion 218 extending from a leading end face 217a to the inside. The hole portion 218 is composed of a cylindrical inner peripheral surface 218a having an inner diameter D1, and a bottom face 218b. The edge section 212 made of, for example, cemented carbide is fitted in the hole portion 218 by interference fitting such as shrinkage fitting.

The edge section 212 is composed of a substantially hemispherical head portion 219 with a cutting edge (not shown), and a substantially cylindrical shaft portion 220 to be shrinkage-fitted in the hole portion 218. The outer diameter D2 of the shaft portion 220 is larger than the inner diameter D1 of the hole portion 218 at ordinary temperature, and the size difference (D2 - D1) serves as an interference for interference fitting. The length L2 of the shaft portion 220 is smaller than the depth L1 of the hole portion 218, and a rear face 219a of the head portion 219 is seated on the leading end face 217a of the attachment portion 217 in the fitted state.

The material of the attachment portion 217 is not limited to steel, and another appropriate material may be adopted as long as it has a higher coefficient of thermal expansion than that of the edge section 212.

In the above-described configuration, the taper shank portion 213, the grip portion 214, the mounting portion 215, the tool shaft 216, and the attachment portion 217 in the arbor 211 and the edge section 212 are formed coaxially with the rotation axis O.

The ball endmill 210 of this embodiment has the above-described configuration. Next, description will be given of a method of fitting the edge section 212.

In a state in which the arbor 211 and the edge section 212 are separate, as shown in Fig. 12, the hole portion 218 of the attachment portion 217 is heated to approximately 200°C so as to make the inner diameter D1 larger than the outer diameter D2 of the shaft portion 220, and the shaft portion 220 is inserted into the hole portion 218. Then, the hole portion 218 of the attachment portion 217 is contracted in the radial direction by cooling, and is shrinkage-fitted on the shaft portion 220, whereby the edge section 212 is firmly connected to the arbor 211.

The taper shank portion 213 of the ball endmill 210 is mounted to the main rotating spindle of the machine tool by a manipulator or the like, and the ball endmill 210 is rotated on the rotation axis O and is subjected to feed cutting, thereby cutting a work material. At this time, the ball endmill 210 has high stiffness because the tool shaft 216 connecting the grip portion 215 of the arbor 211 and the edge section 212 is made of a high-hardness material such as cemented carbide, and therefore, chatter vibration is not caused by deflection of the tool shaft 216 due to cutting resistance. Moreover, since the edge section 212 is precisely fixed to the attachment portion 217 by shrinkage fitting, high-precision cutting is possible, and the edge section 212 can be easily replaced.

As described above, according to this embodiment, stiffness of the arbor 211 is high, and the edge section 212 is precisely constructed because it is fitted by shrinkage fitting, and can be easily replaced. Chatter vibration is reduced during cutting, and high-precision cutting is possible.

Next, other embodiments of the present invention will be described. The same or similar portions and components as those in the above-described fifth embodiment are denoted by the same numerals.

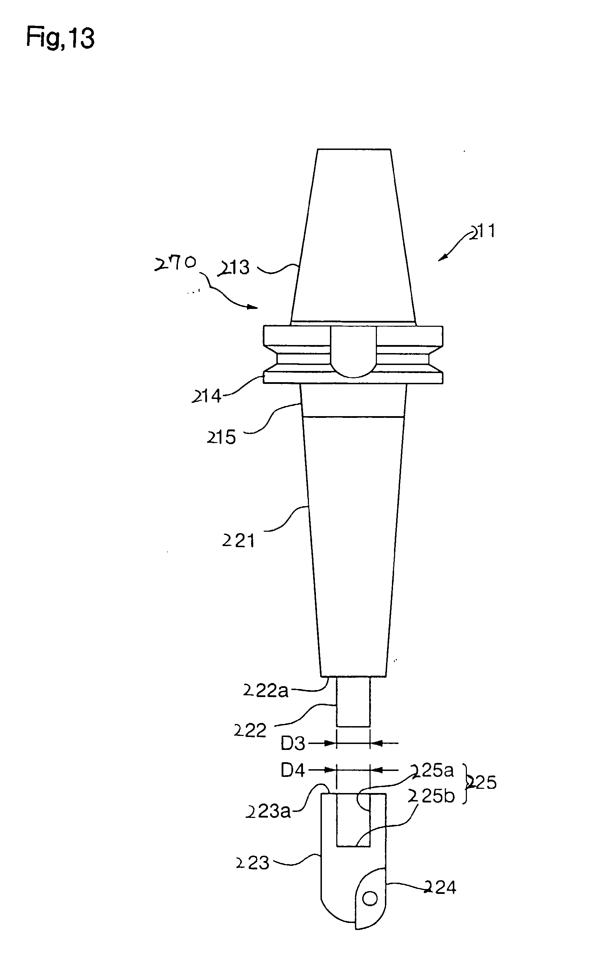

Fig. 13 relates to a ball endmill 270 according to a sixth embodiment of the present invention. In an arbor 211, a tool shaft 221 brazed to a mounting portion 215 at the base end thereof is made of a high-hardness material such as cemented carbide, and tapers down toward the leading end thereof. At the leading end thereof, a cylindrical shaft portion 222 having an outer diameter D3 coaxially projects. The peripheral base portion of the shaft portion 222 is formed into a ring-shaped shoulder portion 222a.

An edge section 223 made of a material having a higher coefficient of thermal expansion than that of the tool shaft 221, e.g., steel, is shrinkage-fitted on the shaft portion 222 of the tool shaft 221. The edge section 223 is substantially cylindrically shaped, and has a hemispherical leading end. A tip 224 having, for example, a substantially leaflike shape is mounted to the hemispherical leading end. A hole portion 225 is coaxially formed at the base end of the edge section 223. The hole portion 225 includes a cylindrical inner peripheral surface 225a having an inner diameter D4, and a bottom face 225b.

The outer diameter D3 of the shaft portion 222 is larger than the inner diameter D4 of the hole portion 225, and the size difference therebetween (D3 - D4) serves as an interference for shrinkage fitting. For this reason, shrinkage fitting is performed by enlarging the hole portion 225 by heating the edge section 223, inserting the shaft portion 222 therein, and seating a peripheral surface 223a of the hole portion 225 on the leading shoulder portion 222a of the tool shaft 221.

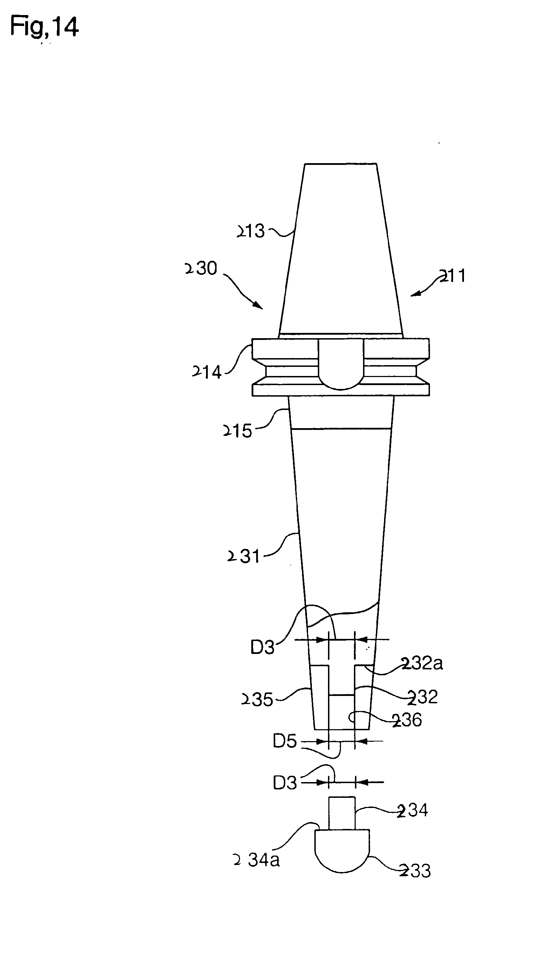

Fig. 14 relates to a ball endmill 230 according to a seventh embodiment of the present invention. In an arbor 211, a tool shaft 231 brazed to a mounting portion 215 at the base end thereof is made of a high-hardness material such as cemented carbide. At the tapered-off leading end thereof, a cylindrical first shaft portion 232 having an outer diameter D3 coaxially projects. The peripheral base portion of the first shaft portion 232 is formed into a ring-shaped shoulder portion 232a.

An edge section 233 to be connected to the tool shaft 231 is made of a high-hardness material, such as cemented carbide, which is the same material as that of the tool shaft 231. A second shaft portion 234 having a substantially cylindrical shape and having an outer diameter D3 projects at the base end of the edge section 233. The peripheral base portion of the second shaft portion 234 is formed into a ring-shaped shoulder portion 234a. The first shaft portion 232 of the tool shaft 231 and the second shaft portion 234 of the edge section 233 are shrinkage-fitted in a substantially cylindrical connecting section 235 so as to face each other. The connecting section 235 is made of a material having a higher coefficient of thermal expansion than those of the tool shaft 231 and the edge section 233, for example, steel. An inner diameter D5 of an inner peripheral surface 236 thereof is set to be smaller than the outer diameter D3 of the shaft portions 232 and 234 at ordinary temperature, and the size difference therebetween (D3 - D5) serves as an interference. In a state in which the shaft portions 232 and 234 are inserted in the connecting section 235 and are shrinkage-fitted, a gap may be formed between the shaft portions 232 and 234, or the shaft portions 232 and 234 may be in contact with each other.

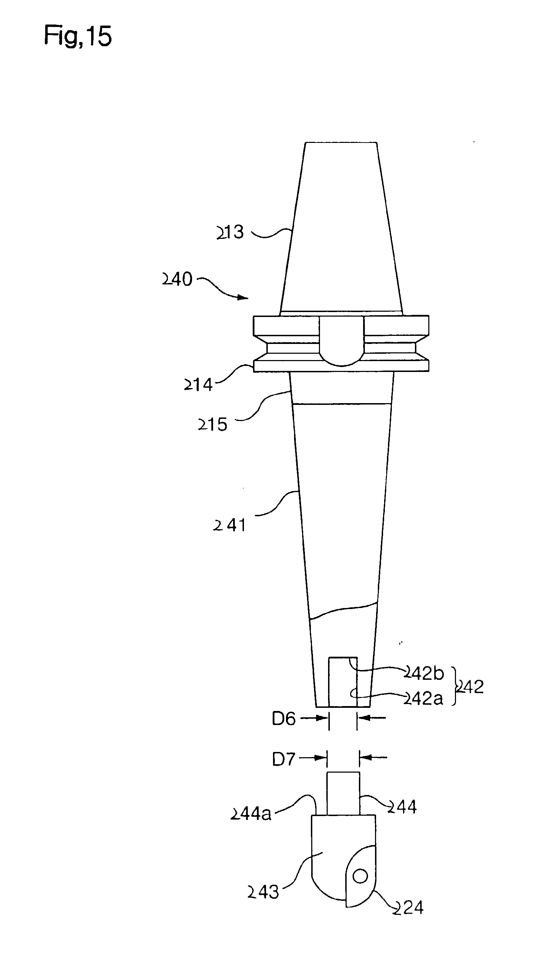

Fig. 15 relates to a ball endmill 240 according to an eighth embodiment of the present invention. In an arbor 211, a tool shaft 241 brazed to a mounting portion 215 at the base end thereof is made of a high-hardness material such as cemented carbide. At the tapered-off leading end thereof, a substantially cylindrical hole portion 242 is coaxially formed. The hole portion 242 includes an inner peripheral surface 242a having an inner diameter D6, and a bottom face 242b. The peripheral portion of the hole portion 242 forms an attachment portion.

In contrast, an edge section 243 is made of a material having a higher coefficient of thermal expansion than that of the tool shaft 241, e.g., steel. The edge section 243 is provided with a tip 224 mounted at the leading end, and a cylindrical shaft portion 244 having an outer diameter D7 and projecting at the base end. The periphery of the base of the shaft portion 244 is formed into a ring-shaped shoulder portion 244a. The outer diameter D7 of the shaft portion 244 is larger than the inner diameter D6 of the hole portion 242 at ordinary temperature, and the size difference therebetween (D7 - D6) serves as an interference for expansion fitting.

In expansion fitting, the shaft portion 244 is caused to decrease its diameter by cooling the edge section 243, is inserted into the hole portion 242 of the tool shaft 241, and is returned to ordinary temperature, whereby it enlarges its diameter and is expansion-fitted.

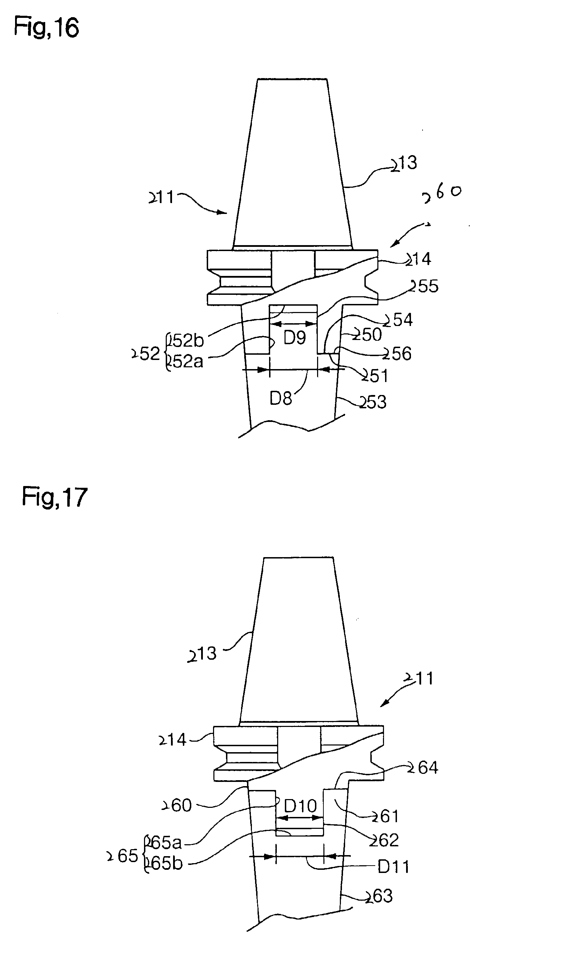

Next, Figs. 16 and 17 show other examples of structures for joining the mounting portion of the arbor 211 and the tool shaft by means other than brazing in the ball endmills according to the above-described fifth to eighth embodiments.

In a ball endmill 260 (210, 230, 240, 270) shown in Fig. 16, a hole portion 252 is formed in a leading end face 251 of a mounting portion 250 in an arbor 211, and is composed of a cylindrical inner peripheral surface 252a having an inner diameter D8, and a bottom face 252b. A shaft portion 255 projects from a base end face 254 of a tool shaft 253. The shaft portion 255 is shaped like a cylinder having a larger diameter D9 than the inner diameter D8 at ordinary temperature, and is provided with a ring-shaped shoulder portion 256 on its outer periphery. The tool shaft 253 is made of a high-hardness material such as cemented carbide, and the mounting portion 250 is made of steel or the like that is a material having a higher coefficient of thermal expansion than that of the tool shaft 253.

When joining the mounting portion 250 in the arbor 211 and the tool shaft 253, the shaft portion 255 of the tool shaft 253 is inserted into the hole portion 252 of the mounting portion 250 which has been heated, and is shrinkage-fitted by cooling. Expansion fitting may be performed by cooling the tool shaft 253.

Next, Fig. 17 shows another example of a structure for joining the mounting portion and the tool shaft in an arbor 211. In Fig. 17, a shaft portion 262 having an outer diameter D10 projects from a leading end face 261 of a mounting portion 260 in the arbor 211. A hole portion 265 is formed in a base end face 264 of a tool shaft 263. The hole portion 265 is composed of an inner peripheral surface 265a having an inner diameter D11 that is smaller than the outer diameter D10 at ordinary temperature, and a bottom face 265b.

The tool shaft 263 is made of a high-hardness material such as cemented carbide. The arbor 211 is made of steel or the like that is a material having a higher coefficient of thermal expansion than that of the tool shaft 263.

When joining the mounting portion 260 of the arbor 211 and the tool shaft 263, the shaft portion 262 is inserted into the hole portion 265 of the tool shaft 263 while the mounting portion 260 is cooled, and the mounting portion 260 is returned to ordinary temperature, whereby the shaft portion 262 increases its diameter, and expansion fitting is established. Shrinkage fitting may be performed by heating the hole portion 265 of the tool shaft 263.

While the tool shafts 216, 221, 231, 241, 253, and 263 are formed in a tapered manner in the above-described embodiments, they may adopt other appropriate shapes such as a straight shape.

While the tool shafts 216, 221, 231, 241, 253, and 263 are made of a high-hardness material such as cemented carbide, the mounting portions 215, 250, and 260 of the arbor 211 are made of a material having a substantially high coefficient of thermal expansion, such as steel, and the edge sections 212, 223, 233, and 243 are made of cemented carbide or steel in the above-described embodiments, the materials of the members are not limited to these materials, and various kinds of materials may be adopted. The members need not always be made of materials having different coefficients of thermal expansion, and may be made of the same material. Even when the members are made of the same material, shrinkage fitting and expansion fitting can be made possible by using diameter differences.

Furthermore, the present invention is applicable not only to the ball endmill, but also to various cutting tools, such as a drill and other milling tools, and a single-point tool and other turning tools.

## Claims

1. An interference fit type cutting tool having a tool with a cutting edge, and a tool holding section that are detachably fixed through a connecting member, wherein said connecting member has at least a predetermined interference with respect to said tool, and is fixed to said tool by interference fitting, and said tool holding section is made of a high-rigidity material.

2. An interference fit type cutting tool according to claim 1, wherein said connecting member is made of at least a material having a higher coefficient of thermal expansion than that of said tool holding section.

3. An interference fit type cutting tool according to claim 1, wherein a projection is formed at the rear end of said tool, said connecting member has a hole that provides a predetermined interference with respect to said projection, and said projection of said tool is inserted in said hole of said connecting member and is fixed by interference fitting.

4. An interference fit type cutting tool according to claim 1, wherein a projection is formed at the rear end of said tool, a projection is formed at the leading end of said tool holding section, said connecting member has holes that provide a predetermined interference with respect to said projections of said tool and said tool holding section, and said projections of said tool and said tool holding section are inserted in said holes of said connecting member so as to face each other in the axial direction, and are fixed in an interference-fitted state.

5. An interference fit type cutting tool according to claim 1, wherein said connecting member is made of steel, and said tool and said tool holding section are made of a high-hardness material.

6. An interference fit type cutting tool according to claim 1, wherein said connecting member has a higher coefficient of thermal expansion than those of said tool and said tool holding section, a projection is formed at one of the base end of said tool and the leading end of said tool holding section, a recess is formed at the other, and a fitting recess and a fitting projection are formed at the leading end and the base end of said connecting member so as to be interference-fitted on and in said projection and said recess.

7. An interference fit type cutting tool according to claim 1, wherein said tool is an edge section, and said tool holding section is a shank section.

8. An interference fit type cutting tool according to claim 1, wherein said tool holding section is a tool shaft, said connecting member is an attachment section for interference-fitting said tool, and said tool shaft is provided with a fixing portion for mounting said tool shaft in a machine tool.

9. An interference fit type cutting tool according to claim 8, wherein said fixing portion and said tool shaft are connected by interference fitting.

10. An interference fit type cutting tool according to claim 8, wherein said tool shaft and said attachment section are integrally formed.
